# FASCICULE DE BREVET EUROPEEN

(11) **EP 3 055 140 B1**
(45) Date de publication et mention de la délivrance du brevet: **28.10.2020**
(21) Numéro de dépôt: 14793202.4
(22) Date de dépôt: 09.09.2014
(51) Int. Cl.: B60B 7/00, B60B 7/02

(54) **ENJOLIVEUR AÉRODYNAMIQUE PERFECTIONNE POUR ROUE DE VÉHICULE**
VERBESSERTE AERODYNAMISCHE RADKAPPE FÜR FAHRZEUGRAD
IMPROVED AERODYNAMIC WHEEL TRIM FOR VEHICLE WHEEL

(30) Priorité: 10.10.2013 FR 1359871
(43) Date de publication de la demande: 17.08.2016
(73) Titulaire: PSA Automobiles SA, 78300 Poissy (FR)
(72) Inventeur: PALPACUER, Eric, 75013 Paris (FR); BRELET, Tom, 78140 Velizy Villacoublay (FR); JEAN-LAURENT, Frederic, 75013 Paris (FR); HARAMBAT, Fabien, 91310 Linas (FR); BOUEILH, Jean Charles, 78370 Plaisir (FR); LAMOULIE, Didier, 92370 Chaville (FR)
(74) Mandataire: Fernandez, Francis Lionel
(86) Numéro de dépôt international: PCT/FR2014/052223
(87) Numéro de publication internationale: WO 2015/052390

(56) Documents cités:
- WO-A2-2013/083729
- DE-A1- 2 750 424
- JP-A- S6 012 304
- US-A- 2 761 530

## Description

L'invention porte sur un enjoliveur aérodynamique perfectionné pour roue de véhicule, en particulier pour roue de véhicule automobile. Elle concerne aussi un véhicule dont les roues sont équipées de tels enjoliveurs.

L'enjoliveur de roue, appelé aussi chapeau de roue, est une pièce en matière métallique ou en matière plastique, par exemple en polyamide, qui est placée sur l'extérieur de la partie centrale d'une roue d'un véhicule pour décorer : l'enjoliveur permet « d'habiller » les roues en tôle du véhicule conçues comme structurelles et dépourvues de style.

Les enjoliveurs dits « standards » ne présentent pas de caractéristiques aérodynamiques optimales, mais essentiellement des caractéristiques de style. Ils présentent un ajourage relativement important et impactent l'aérodynamique du véhicule.

On connaît des enjoliveurs dits « aérodynamiques », qui permettent de réduire la traînée aérodynamique du véhicule. Ils présentent, contrairement aux enjoliveurs précédents, un ajourage minimal qui a une incidence négative sur le refroidissement des freins.

On connaît également, selon le document FR 2 909 966, un dispositif de réduction de la traînée aérodynamique d'un véhicule, lequel dispositif comprend, associés à chacune des jantes, des moyens de ventilation destinés à créer des écoulements d'air auxiliaires. Ces moyens de ventilation sont constitués par des branches formant des pales disposées radialement entre le moyeu central et le bord correspondant de la périphérie de la jante. Ces pales sont profilées et orientées pour faire office de ventilateur axial lors de l'entraînement en rotation de la jante dans le sens d'avancement du véhicule. De plus, ces pales, qui sont fixes par rapport au moyeu et à la périphérie de la jante, sont montées avec capacité d'orientation par rapport audit moyeu et à ladite périphérie de la jante.

Le document DE 27 50 424 A1 divulgue le préambule de la revendication 1.

Le but de la présente invention est de fournir un enjoliveur aérodynamique perfectionné pour roue de véhicule, en particulier pour roue de véhicule automobile, qui permette d'optimiser, à la fois, la traînée aérodynamique du véhicule et le refroidissement des freins.

Un autre but de la présente invention est de fournir un tel enjoliveur aérodynamique, qui apporte un gain en CO₂.

C'est également un but de la présente invention de fournir un tel enjoliveur aérodynamique perfectionné, qui soit de structure simple, d'assemblage aisé, et qui soit économique, notamment en présentant un coût identique à celui d'un enjoliveur standard.

Pour parvenir à ces buts, la présente invention a pour objet un nouvel enjoliveur aérodynamique pour roue de véhicule conforme à la revendication 1.

Selon un mode préféré de réalisation de l'invention, les ajourages radiaux formés par les pales d'enjoliveur peuvent être sensiblement identiques et en même nombre que les ajourages radiaux du voile de la roue sur laquelle est monté l'enjoliveur.

A titre d'exemple non limitatif de l'objet et de la portée de l'invention, lesdites pales d'enjoliveur et les pales du voile de la roue peuvent avantageusement être en nombre identique, de préférence égal à 16.

De préférence, les pales d'enjoliveur peuvent être radialement comprises entre deux parois axiales, sensiblement cylindriques, de l'enjoliveur, lesquelles parois forment deux déflecteurs pour concentrer le flux d'air dans les ajourages radiaux du voile de la roue.

Les pales d'enjoliveurs peuvent avantageusement être de forme courbe pour optimiser le champ des vitesses lié à la force centrifuge.

L'invention a aussi pour objet une roue de véhicule, en particulier une roue de véhicule automobile, qui comporte un enjoliveur aérodynamique perfectionné conforme à celui décrit ci-dessus dans ses grandes lignes.

L'invention a enfin pour objet un véhicule, en particulier un véhicule automobile, dont les roues sont conformes à la roue décrite ci-dessus dans ses grandes lignes, c'est-à-dire comportant chacune un enjoliveur aérodynamique perfectionné selon la présente invention.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective d'une roue de véhicule équipée d'un l'enjoliveur aérodynamique perfectionné selon la présente invention,
- la figure 2 est une vue partielle, agrandie, en coupe et en perspective, montrant principalement les déflecteurs de l'enjoliveur aérodynamique perfectionné de la figure 1, et
- la figure 3 est un croquis représentatif de la section d'une pale de l'enjoliveur aérodynamique perfectionné des figures précédentes.

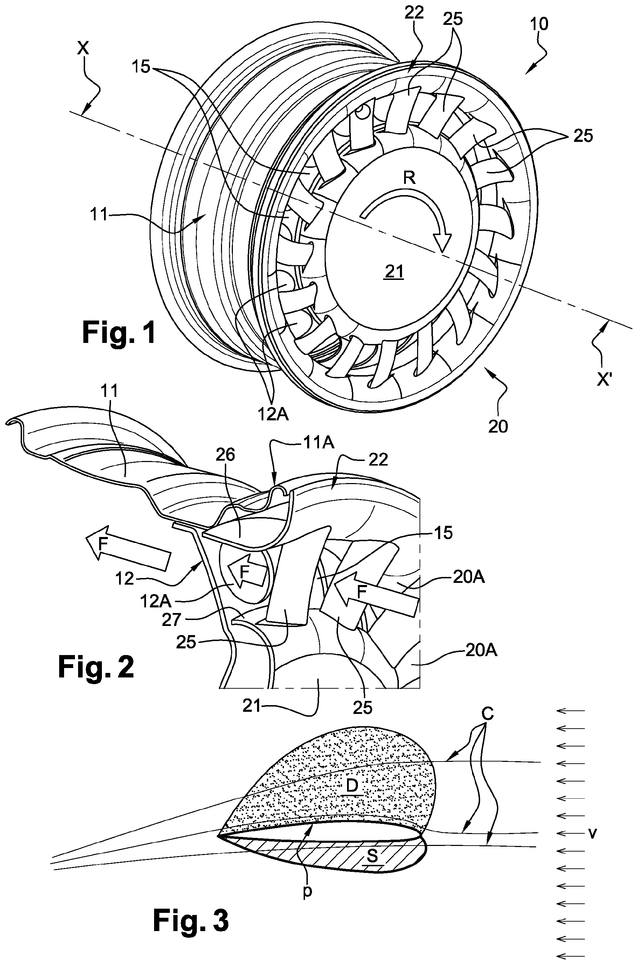

En référence aux dessins des figures 1 et 2, on a représenté un exemple de réalisation de l'enjoliveur aérodynamique selon la présente invention permettant à la fois un bon refroidissement des freins du véhicule et une faible traînée aérodynamique.

Selon la présente invention, l'enjoliveur aérodynamique perfectionné, appelé aussi « enjoliveur turbine » dans la suite du texte, de référence générale 20, aspire ou souffle l'air au travers de la roue de véhicule, de référence générale 10, de façon à améliorer le sillage latéral de la roue 10 et obtenir, ainsi, un écoulement plus propre et moins tourbillonnaire sur les flancs du véhicule.

La roue 10 de véhicule, qui est avantageusement une roue de véhicule automobile, est constituée, de manière classique, d'une jante 11 et d'un voile 12 (figure 2). Le voile 12 est le disque central qui se fixe sur le moyeu de roue à l'aide des écrous de roue. La jante 11 est le cercle profilé en une ou deux parties, qui est fixé perpendiculairement au voile. Le voile 12 est un voile ajouré pour réduire son poids et créer, pendant la marche du véhicule (illustrée par la flèche « R » de la figure 1), un flux d'air axial pour le refroidissement des freins.

Les ajourages radiaux du voile 12 de la roue 10 sont référencés 12A sur les figures 1 et 2 et sont formés par des pales 15, qui sont disposées radialement entre le moyeu central et le bord périphérique 11A de la jante 11.

Selon le principe de la présente invention, l'enjoliveur aérodynamique 20 présente également des ajourages radiaux, qui sont désignés par la référencé numérique 20A et qui sont formés par les espacements entre les pales d'enjoliveur 25 disposées radialement entre la partie centrale 21 de l'enjoliveur 20 et le bord périphérique 22 de ce dernier. De cette façon, les pales d'enjoliveur 25 dévient le flux d'air latéral de manière indirecte et le canalise au travers des ajourages radiaux 12A du voile 12 de la roue 10. Les flèches « F » de la figure 2 illustrent cette déviation du flux d'air.

A titre d'exemple non limitatif de l'objet et de la portée de la présente invention, l'enjoliveur turbine 20 est équipé de 16 pales 25 de profil « aile d'avion » et cet ajourage de l'enjoliveur turbine 20 est identique à l'ajourage du voile 12 de la roue 10. Ainsi, dans cet exemple de description, le voile 12 de la roue 10 présente 16 ajourages radiaux 12A formés par 16 pales 15, qui sont disposées radialement entre le moyeu central et le bord périphérique 11A de la jante 11.

Comme montré sur le dessin de la figure 2, les pales d'enjoliveur 25 sont radialement comprises entre deux parois axiales désignées 26 et 27, qui sont sensiblement cylindriques et qui forment deux déflecteurs pour concentrer le flux d'air « F » dans les ajourages radiaux 12A du voile 12 de la roue 10 et éviter les turbulences.

Le profil « aile d'avion » des pales d'enjoliveur 25 est un profil de type « CLARK Y », de forme relativement simple, très efficace à petite échelle, qui est représenté de façon très schématique sur le dessin de la figure 3. Le profil « CLARK Y » est un profil aérodynamique particulier, très largement utilisé dans la construction aéronautique et le modélisme.

Les pales d'enjoliveurs 25 sont inclinées d'un angle compris entre 3° et 13° d'angle par rapport au plan général de l'enjoliveur, c'est-à-dire par rapport au plan orthogonal à l'axe XX' de l'enjoliveur 20.

De plus, ces pales d'enjoliveurs 25 peuvent être de forme courbe pour optimiser le champ des vitesses lié à la force centrifuge.

En référence au dessin de la figure 3, on a représenté une section « CLARK Y » de profil « p » d'une pale d'enjoliveur 25 et un flux d'air « v » autour de la pale. Les lignes « c » illustrent les couches laminaires. La zone désignée « D » est une zone de dépression, tandis que la zone désignée « S » est une zone de surpression. La surpression liée à la pale souffle l'air dans l'ajourage de la roue, l'air est canalisé par les deux déflecteurs 26 et 27 de l'enjoliveur 20.

L'enjoliveur turbine 20 décrit ci-dessus dans un mode de réalisation particulier présente de nombreux avantages, parmi lesquels les avantages suivants :
- il permet d'optimiser la traînée aérodynamique du véhicule,
- il permet un gain en CO2 estimé à 0,5g/Km,
- il permet un refroidissement du frein optimisé par le flux d'air généré, et
- il est économique, notamment parce qu'il présente un coût sensiblement identique à celui d'un enjoliveur standard.

## Revendications

1. Enjoliveur aérodynamique perfectionné pour roue de véhicule, en particulier pour roue de véhicule automobile, ladite roue (10) présentant une jante cylindrique (11) et un voile (12) comportant des ajourages radiaux (12A) formés par des pales (15) disposées radialement entre le moyeu central et le bord périphérique (11A) de la jante (11), ledit enjoliveur aérodynamique perfectionné (20) présentant également des ajourages radiaux (20A) formés par des pales d'enjoliveur (25) disposées radialement entre la partie centrale (21) de l'enjoliveur (20) et le bord périphérique (22) de ce dernier, de telle sorte que les pales d'enjoliveur (25) dévient le flux d'air latéral de manière indirecte et le canalise au travers des ajourages radiaux (12A) du voile (12) de la roue (10), ledit enjoliveur étant **caractérisé en ce que** les pales d'enjoliveur (25) présentent un profil de type « aile d'avion » de type « CLARK Y » et **en ce que** les pales d'enjoliveurs (25) sont inclinées d'un angle (« α ») compris entre 3° et 13° d'angle.

2. Enjoliveur aérodynamique perfectionné selon la revendication 1, **caractérisé en ce que** les ajourages radiaux (20A) formés par les pales d'enjoliveur (25) sont sensiblement identiques et en même nombre que les ajourages radiaux (12A) du voile (12) de la roue (10).

3. Enjoliveur aérodynamique perfectionné selon la revendication 2, **caractérisé en ce que** lesdites pales d'enjoliveur (25) et lesdites pales (15) du voile (12) de la roue (10) sont en nombre identique et égal à 16.

4. Enjoliveur aérodynamique perfectionné selon l'une quelconque des revendications 1 à 3, **caractérisé en ce que** les pales d'enjoliveur (25) sont radialement comprises entre deux parois axiales (26, 27), sensiblement cylindriques, formant deux déflecteurs pour concentrer le flux d'air dans les ajourages radiaux (12A) du voile (12) de la roue (10).

5. Enjoliveur aérodynamique perfectionné selon l'une quelconque des revendications 1 à 4, **caractérisé en ce que** les pales d'enjoliveur (25) sont de forme courbe pour optimiser le champ des vitesses lié à la force centrifuge.

6. Roue de véhicule, **caractérisée en ce qu'**elle comporte un enjoliveur aérodynamique perfectionné (20) conforme à l'une quelconque des revendications précédentes.

7. Véhicule, en particulier véhicule automobile, **caractérisé en ce que** chacune de ses roues est conforme à la revendication 6.

## Patentansprüche

1. Verbesserte aerodynamische Radkappe für ein Fahrzeugrad, insbesondere für ein Kraftfahrzeugrad, wobei das Rad (10) eine zylindrische Felge (11) und eine Bahn (12) aufweist, die radiale Öffnungen (12A) umfasst, die durch angeordnete Schaufeln (15) gebildet sind radial zwischen der zentralen Nabe und der Umfangskante (11A) der Felge (11), wobei die verbesserte aerodynamische Abdeckung (20) auch radiale Öffnungen (20A) aufweist, die durch Abdeckschaufeln (25) gebildet sind, die radial dazwischen angeordnet sind den Mittelteil (21) der Abdeckung (20) und die Umfangskante (22) der letzteren, so dass die Abdeckschaufeln (25) indirekt den seitlichen Luftstrom umleiten und ihn zum Kanal leiten durch radiale Öffnungen (12A) der Bahn (12) des Rades (10) ist die Radkappe **dadurch gekennzeichnet, dass** die Radkappenblätter (25) ein Profil vom Typ "Flugzeugflügel" vom Typ "CLARK Y" aufweisen Und dadurch sind die Trimmklingen (25) in einem Winkel (" α ") geneigt zwischen 3 ° und 13 ° Winkel weggelassen.

2. Verbesserte aerodynamische Radkappe nach Anspruch 1, **dadurch gekennzeichnet, dass** die durch die Radkappenblätter (25) gebildeten radialen Öffnungen (20A) im wesentlichen identisch sind und die gleiche Anzahl wie die radialen Öffnungen (12A) der Radbahn (12) aufweisen (10).

3. Verbesserte aerodynamische Radkappe nach Anspruch 2, **dadurch gekennzeichnet, dass** die Radkappenschaufeln (25) und die Schaufeln (15) der Bahn (12) des Rades (10) in der Anzahl identisch und gleich 16 sind.

4. Verbesserte aerodynamische Radkappe nach einem der Ansprüche 1 bis 3, **dadurch gekennzeichnet, dass** die Radkappenblätter (25) radial zwischen zwei axialen Wänden (26, 27) angeordnet sind, die im wesentlichen zylindrisch sind und zwei Ablenker zum Konzentrieren der Strömung von bilden Luft in den radialen Öffnungen (12A) der Bahn (12) des Rades (10).

5. Verbesserte aerodynamische Radkappe nach einem der Ansprüche 1 bis 4, **gekennzeichnet dadurch, dass** die Radkappenblätter (25) gekrümmt sind, um das mit der Zentrifugalkraft verbundene Geschwindigkeitsfeld zu optimieren.

6. Fahrzeugrad, **dadurch gekennzeichnet, dass** es eine verbesserte aerodynamische Radkappe (20) gemäß einem der vorhergehenden Ansprüche umfasst.

7. Fahrzeug, insbesondere ein Kraftfahrzeug, **dadurch gekennzeichnet, dass** jedes sseiner Räder Anspruch 6 entsprich.

## Claims

1. Improved aerodynamic hubcap for a vehicle wheel, in particular for a motor vehicle wheel, said wheel (10) having a cylindrical rim (11) and a web (12) comprising radial openings (12A) formed by blades (15) arranged radially between the central hub and the peripheral edge (11A) of the rim (11), said improved aerodynamic cover (20) also having radial openings (20A) formed by cover blades (25) disposed radially between the central part (21) of the cover (20) and the peripheral edge (22) of the latter, so that the cover blades (25) indirectly divert the lateral air flow and channel it to the through radial openings (12A) of the web (12) of the wheel (10), said hubcap being **characterized in that** the hubcap blades (25) have an "airplane wing" type profile of the "CLARK Y" type "And **in that** the trim blades (25) are inclined at an angle (" α ") omitted between 3 ° and 13 ° of angle.

2. Improved aerodynamic hubcap according to claim 1, **characterized in that** the radial openings (20A) formed by the hubcap blades (25) are substantially identical and in the same number as the radial openings (12A) of the wheel web (12) (10).

3. Improved aerodynamic hubcap according to claim 2, **characterized in that** said hubcap blades (25) and said blades (15) of the web (12) of the wheel (10) are identical in number and equal to 16.

4. Improved aerodynamic hubcap according to any one of claims 1 to 3, **characterized in that** the hubcap blades (25) are radially comprised between two axial walls (26, 27), substantially cylindrical, forming two deflectors for concentrating the flow of air in the radial openings (12A) of the web (12) of the wheel (10).

5. Improved aerodynamic hubcap according to any one of claims 1 to 4, **characterized in that** the hubcap blades (25) are curved in order to optimize the speed field linked to the centrifugal force.

6. Vehicle wheel, **characterized in that** it comprises an improved aerodynamic hubcap (20) according to any one of the preceding claims.

7. Vehicle, in particular a motor vehicle, **characterized in that** each of its wheels conforms to claim 6.
